# EUROPÄISCHE PATENTSCHRIFT

(11) **EP 0 751 279 B1**
(45) Veröffentlichungstag und Bekanntmachung des Hinweises auf die Patenterteilung: **22.12.1999**
(21) Anmeldenummer: 96104656.2
(22) Anmeldetag: 23.03.1996
(51) Int. Cl.: E06B 9/88, E06B 9/70, E06B 9/90

(54) **Vorrichtung zur Erfassung der Bewegung eines Antriebsgurts für einen Rolladenpanzer**
Device for controlling the movement of a driving belt for a roller shutter
Dispositif pour contrôler le mouvement d'une bande d'entraînement d'un volet roulant

(30) Priorität: 30.06.1995 DE 19523914
(43) Veröffentlichungstag der Anmeldung: 02.01.1997
(73) Patentinhaber: ROBERT BOSCH GMBH, 70442 Stuttgart (DE)
(72) Erfinder: Meyer-Staufenbiel, Torsten, 71254 Ditzingen (DE); Frei, Martin, 71665 Vaihingen/Enz (DE); Straeter, Michael, Dipl.-Ing., 71691 Freiberg (DE); Sorg, Dieter, Dipl.-Ing., 75050 Gemmingen (DE)

(56) Entgegenhaltungen:
- EP-A- 0 092 118
- EP-A- 0 552 459
- DE-A- 2 837 415
- DE-A- 3 425 874
- FR-A- 2 673 234

## Beschreibung

### STAND DER TECHNIK

Die Erfindung betrifft eine Vorrichtung zur Erfassung der Bewegung eines Antriebsgurts für einen Rolladenpanzer durch Erfassung der Drehbewegung eines Rotationselements in einer elektrischen Antriebsvorrichtung für den Rolladenpanzer nach der Gattung des Hauptanspruchs.

Bei einem bekannten, von der Anmelderin unter der Bezeichnung "Roll-Lift" vertriebenen Rolladenantrieb wird ein Nockenrad über Zahnräder vom Antriebsmotor für den Rollladengurt angetrieben. Der Nocken des Nockenrads betätigt dadurch bei der Bewegung des Rolladengurts wiederholt einen Mikroschalter, dessen Signale in einer Zähleinrichtung gezählt werden. Da die Signale entsprechend der Drehrichtung des Elektromotors in entgegengesetzten Zählrichtungen gezählt werden, ist der Zählerstand ein Maß für die Position des Rolladengurts und damit des Rolladenpanzers, so daß unter anderem dessen Endstellungen über entsprechende Zahlenvorgaben eingestellt werden können. Der Nachteil der bekannten Anordnung besteht darin, daß die mechanische Betätigung des Mikroschalters nach längerer Zeit zu Verschleißerscheinungen führt, die Störungen der Positionserfassung nach sich ziehen können. Darüber hinaus verursacht die Betätigung des Mikroschalters unerwünschte Geräusche. Der Mikroschalter selbst weist eine nicht unerhebliche Baugröße auf. Eine Erkennung, ob sich der Rolladengurt korrekterweise bewegt, ist nicht vorgesehen.

### VORTEILE DER ERFINDUNG

Die erfindungsgemäße Vorrichtung mit den kennzeichnenden Merkmalen des Hauptanspruchs hat demgegenüber den Vorteil, daß ein zusätzliches Antriebsrad, wie ein Nockenrad, vollständig entfallen kann und daß die ohnehin vorhandene Umlenkrolle zur Bewegungserkennung und nach Wunsch auch zur Positionserfassung eingesetzt werden kann. Hierdurch verringern sich die Kosten, und es sind kleinere Baugrößen möglich, nicht zuletzt dadurch, daß die kontaktlos durch Magnetfeldbeeinflussung arbeitende Sensoreinrichtung eine wesentlich geringere Baugröße im Vergleich zu einem Mikroschalter aufweisen kann. Eine Beeinträchtigung durch Korrosion und Verschmutzung ist nicht mehr zu befürchten. Die Erfassung der Gurtbewegung erfolgt durch die Umlenkrolle direkt am Antriebsgurt, so daß bei einer Positionserfassung ein eventueller Schlupf oder ein Spiel in der Antriebsvorrichtung nicht in die Messung eingehen. Diese wird dadurch sehr exakt.

Durch die in den Unteransprüchen aufgeführten Maßnahmen sind vorteilhafte Weiterbildungen und Verbesserungen der im Hauptanspruch angegebenen Vorrichtung möglich.

Eine konstruktiv sehr einfache Lösung ergibt sich dadurch, daß das wenigstens eine Element zylinderförmig ausgebildet und in wenigstens eine entsprechende Bohrung der Umlenkrolle eingelassen ist, vorzugsweise im Umfangsbereich dieser Umlenkrolle.

Die Sensoreinrichtung ist zweckmäßigerweise als Hall-Element oder Feldplatte ausgebildet, sie kann jedoch auch insbesondere ein Reed-Kontakt sein, wobei dann das Element als permanentmagnetisches Element ausgebildet ist.

Eine einfache Montage der Antriebsvorrichtung ergibt sich dadurch, daß die Sensoreinrichtung auf einer Leiterplatte angeordnet ist, die vorzugsweise weitere elektronische Bauteile einer elektronischen Steuereinrichtung für die Antriebsvorrichtung und/oder einer Auswerteeinrichtung für die Signale der Sensoreinrichtung enthält. Beim Einsetzen dieser ohnehin erforderlichen Leiterplatte wird dann gleichzeitig die Sensoreinrichtung montiert und positioniert.

### ZEICHNUNG

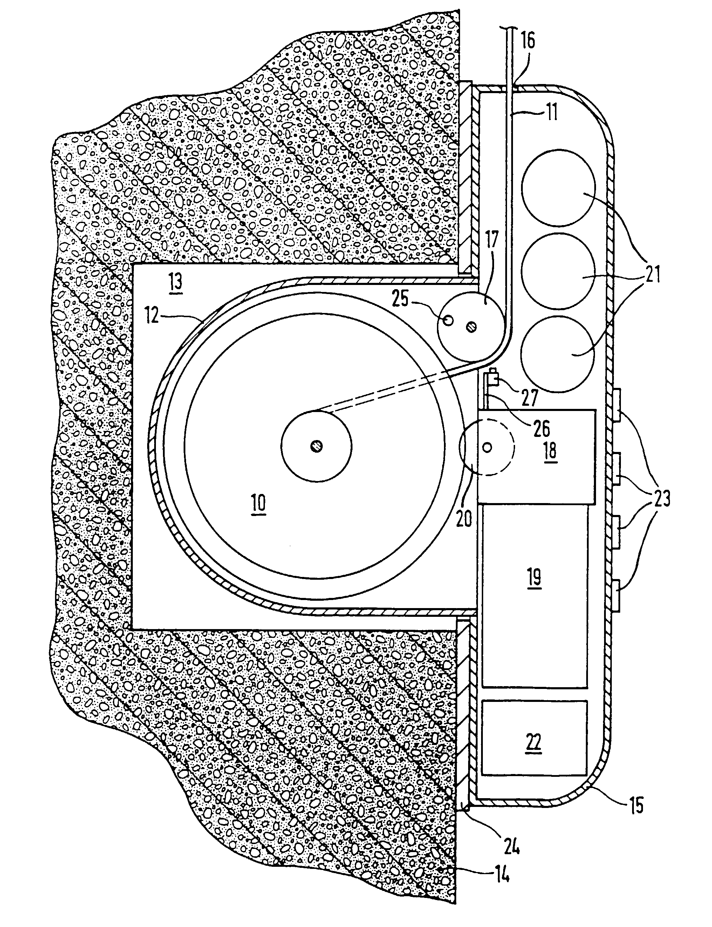

Ein Ausführungsbeispiel der Erfindung ist in der Zeichnung dargestellt und in der nachfolgenden Beschreibung näher erläutert. Die einzige Figur zeigt eine schematische Längsschnittdarstellung einer elektrischen Antriebsvorrichtung für einen Rolladenpanzer über einen Antriebsgurt als Ausführungsbeispiel der Erfindung.

### BESCHREIBUNG DES AUSFÜHRUNGSBEISPIELS

Die in der einzigen Figur dargestellte Antriebsvorrichtung besteht im wesentlichen aus einem flachen, eine Aufwickelrolle 10 für einen Antriebsgurt 11 eines Rolladens enthaltenden Gurtkasten 12, der so gestaltet ist, daß er in eine ohnehin vorhandene Wandausnehmung 13 für eine manuell bedienbare Aufwickelrolle in einer Gebäudewand 14 eingeschoben werden kann. An diesem Gurtkasten 12 ist ein Motorgehäuse 15 so angebracht, daß dieses außerhalb der Wandausnehmung 13 flach an der Gebäudewand 14 anliegt und dabei die Begrenzungen der Wandausnehmung 13 nach allen vier Seiten hin übergreift, so daß die Wandausnehmung 13 vollständig abgedeckt ist.

Der Antriebsgurt 11 kann mittels der Aufwickelrolle 10 im Gurtkasten 12, die dort im wesentlichen mittig drehbar gelagert ist, auf- und abgewickelt werden und verläuft von dieser aus über eine Umlenkrolle 17 durch das Motorgehäuse 15 und durch eine entsprechende Öffnung 16 in demselben nach außen und dann im wesentlichen parallel zur Gebäudewand 14 nach oben zu einem nicht dargestellten, in üblicher Weise ausgebildeten Rolladenkasten, in dem eine drehbar gelagerte Wickelwelle zum Auf- und Abwickeln des Rolladenpanzers vom Antriebsgurt 11 angetrieben wird.

Im Motorgehäuse 15 ist im mittleren Bereich ein Untersetzungsgetriebe 18 angeordnet, das durch einen darunter angeordneten elektrischen Antriebsmotor 19 angetrieben wird. Vom Untersetzungsgetriebe 18 aus greift ein Zahnrad 20 in den Gurtkasten 12 ein und ist dort mit einem zur Vereinfachung nicht dargestellten Zahnkranz am äußeren Umfangsbereich der Aufwickelrolle 10 verzahnt. Anstelle eines Zahnantriebs kann prinzipiell auch ein Reibradantrieb, ein Zahnriemenantrieb oder ein sonstiger bekannter Antrieb treten.

Zum Antrieb des als Gleichstrommotor ausgebildeten Antriebsmotors 19 dienen Batterien 21 im oberen Bereich des Motorgehäuses 15, die beispielsweise als wiederaufladbare Batterien ausgebildet sein können. Selbstverständlich ist auch eine Stromversorgung über ein Anschlußkabel möglich.

Im untersten Bereich des Motorgehäuses 15 ist eine elektronische Steuereinrichtung 22 für den Antriebsmotor 19 untergebracht, die selbstverständlich auch an anderen Stellen im Motorgehäuse 15 untergebracht sein kann. Sie dient in an sich bekannter Weise zur zeitlichen und/oder Helligkeits-Steuerung des Antriebsmotors 19, wobei auch elektronische Mittel zur unteren und oberen Endabschaltung des Rolladens vorgesehen sind. Die Bedienung des Antriebsmotors 19 bzw. der elektronischen Steuereinrichtung 22 erfolgt über Bedienungselemente 23 an der von der Gebäudewand 14 wegweisenden flachen Außenseite des Motorgehäuses 15. Elektronische Steuereinrichtungen für derartige Antriebsmotoren sind beispielsweise aus der DE-OS 28 37 415, der DE-PS 33 04 962, der DE-OS 43 01 971 oder dem eingangs angegebenen Stand der Technik bekannt.

Zur Anpassung an die Tiefe der Wandausnehmung 13 kann noch eine Distanzplatte 24 zwischen der Gebäudewand 14 und dem Motorgehäuse 15 angeordnet werden.

In der aus nicht-ferromagnetischem Material, beispielsweise aus Kunststoff, bestehenden Umlenkrolle 17 ist ein zylinderförmiges permanentmagnetisches Element 25 im Bereich des Außenumfangs eingelassen. Beispielsweise kann dieses permanentmagnetische Element 25 in eine entsprechende Bohrung eingeklemmt oder eingeklebt werden. Ein an einer Leiterplatte 26 befestigter Reed-Schalter ist möglichst nahe dem Außenumfang der Umlenkrolle 17 positioniert. Jedesmal, wenn das Element 25 den Reed-Schalter 27 passiert, schaltet dieser und erzeugt dadurch ein Sensorsignal, das in einer nicht dargestellten Zähleinrichtung der elektronischen Steuereinrichtung 22 aufwärts oder abwärts je nach der Drehrichtung des Antriebsmotors 19 gezählt wird. Der Zählerstand ist dadurch ein Maß für die Positon des Antriebsgurts 11 und dadurch für die Position des nicht dargestellten Rolladenpanzers. Zwei vorgebbare Zahlenwerte geben dabei die beiden Endpositionen für die Bewegung vor, bei denen jeweils der Antrieb automatisch abgeschaltet wird, wie dies im genannten Stand der Technik näher beschrieben ist.

Die Signale des Reed-Schalters 27 können jedoch auch alternativ oder zusätzlich zur Erfassung der Bewegung des Antriebsgurts 11 eingesetzt werden. Läuft der Rolladenpanzer beispielsweise bei der Abwärtsbewegung auf ein Hindernis auf oder bleibt er aus anderen Ursachen hängen, so kann der Antriebsgurt nicht mehr aus dem Gehäuse herausgespult werden, so daß sich die Umlenkrolle 17 nicht mehr bewegt. Der Reed-Schalter 27 liefert dann keine Signale mehr. Dies wird von der elektronischen Steuerung in an sich bekannter Weise erkannt, und der Motor wird dann abgeschaltet.

Anstelle eines einzigen permanentmagnetischen Elements 25 in der Umlenkrolle 17 können auch mehrere, gleichmäßig über den Umfang verteilte permanentmagnetische Elemente 25 vorgesehen sein, so daß bei jeder Umdrehung der Umlenkrolle 17 mehrere Sensorsignale erzeugt werden, um z. B. eine feinere Auflösung der Positionssteuerung zu gestatten. Die permanentmagnetischen Elemente 25 können axial oder radial in der Umlenkrolle 17 eingelassen sein.

Anstelle eines Reed-Schalters 27 können auch andere magnetfeldempfindliche Sensoreinrichtungen vorgesehen sein, z.B. ein Hall-Element oder eine Feldplatte. Weiterhin ist es möglich, anstelle eines (oder mehrerer) permanentmagnetischen Elements ein nichtmagnetisiertes ferromagnetisches Element vorzusehen, das ebenfalls beispielsweise in einem entsprechend ausgebildeten Hall-Element ein Sensorsignal erzeugt.

Die Leiterplatte 26 kann beispielsweise eine nicht dargestellte Auswerteelektronik für die erzeugten Zählsignale enthalten, oder aber sie reicht bis in die elektronische Steuereinrichtung 22 hinein und hält zusätzlich weitere elektronische Bauelemente der Steuerschaltung dieser elektronischen Steuereinrichtung. In diesem Falle wird die elektronische Steuereinrichtung 22 im Motorgehäuse 15 in der Nähe der Umlenkrolle 17 angeordnet. Auf dieser Leiterplatte 26 können beispielsweise auch die Erkennungsschaltung für die Signalerzeugung, also die Bewegung des Antriebsgurts, und eine Abschalteelektronik für den Antriebsmotor untergebracht sein, die anspricht, wenn keine Sensorsignale mehr auftreten und detektiert werden.

## Patentansprüche

1. Vorrichtung zur Erfassung der Bewegung eines Antriebsgurts für einen Rolladenpanzer durch Erfassung der Drehbewegung eines Rotationselements in einer elektrischen Antriebsvorrichtung für den Rolladenpanzer mittels einer entsprechende Signale erzeugenden Sensoreinrichtung, wobei der Antriebsgurt von einer Aufwickelrolle der Antriebsvorrichtung über eine Umlenkrolle zu einer Wickelwelle für den Rolladenpanzer verläuft, dadurch gekennzeichnet, daß die das Rotationselement bildende, aus nicht-ferromagnetischem Material bestehende Umlenkrolle (17) wenigstens ein ferromagnetisches und/oder permanentmagnetisches Element (25) enthält, das in der Sensoreinrichtung (27) jeweils beim Passieren derselben durch Magnetfeldbeeinflussung ein Signal erzeugt.

2. Vorrichtung nach Anspruch 1, dadurch gekennzeichnet, daß das wenigstens eine Element (25) zylinderförmig ausgebildet und in wenigstens eine entsprechende Bohrung der Umlenkrolle (17) eingelassen ist.

3. Vorrichtung nach Anspruch 1 oder 2, dadurch gekennzeichnet, daß das wenigstens eine Element (25) im Umfangsbereich der Umlenkrolle (17) angeordnet ist.

4. Vorrichtung nach einem der vorhergehenden Ansprüche, dadurch gekennzeichnet, daß die Sensoreinrichtung als Hall-Element oder Feldplatte ausgebildet ist.

5. Vorrichtung nach einem der Ansprüche 1 bis 3, dadurch gekennzeichnet, daß die Sensoreinrichtung (27) als Reed-Schalter und das Element (25) als permanentmagnetisches Element ausgebildet sind.

6. Vorrichtung nach einem der vorhergehenden Ansprüche, dadurch gekennzeichnet, daß die Sensoreinrichtung (27) auf einer Leiterplatte (26) angeordnet ist.

7. Vorrichtung nach Anspruch 6, dadurch gekennzeichnet, daß die Leiterplatte (26) weitere elektronische Bauteile einer elektronischen Steuereinrichtung (22) für die Antriebsvorrichtung und/oder einer Auswerteeinrichtung für die Signale der Sensoreinrichtung (27) enthält.

8. Vorrichtung nach einem der vorhergehenden Ansprüche, dadurch gekennzeichnet, daß elektronische Mittel zur überprüfung der Erzeugung der Sensorsignale vorgesehen sind.

9. Vorrichtung nach einem der vorhergehenden Ansprüche, dadurch gekennzeichnet, daß eine Positionserkennungseinrichtung Mittel zur Zählung der Sensorsignale aufweist, wobei der Zählwert einem Positions-Istwert entspricht.

## Claims

1. Apparatus for detecting the movement of a drive belt for a roller shutter by detecting the rotary movement of a rotating element in an electrical drive apparatus for the roller shutter by means of a sensor device which produces appropriate signals, in which case the drive belt runs from a winding roller of the drive apparatus via a guide roller to a winding shaft for the roller shutter, characterized in that the guide roller (17) which forms the rotating element and is made of non-ferromagnetic material contains at least one ferromagnetic and/or permanently magnetic element (25) which produces a signal in the sensor device (27) whenever it passes the latter, by the influence of the magnetic field.

2. Apparatus according to Claim 1, characterized in that the at least one element (25) is designed in a cylindrical shape, and is introduced into at least one corresponding hole in the guide roller (17).

3. Apparatus according to Claim 1 or 2, characterized in that the at least one element (25) is arranged in the circumferential region of the guide roller (17).

4. Apparatus according to one of the preceding claims, characterized in that the sensor device is designed as a Hall element or a magnetoresistor.

5. Apparatus according to one of Claims 1 to 3, characterized in that the sensor device (27) is designed as a reed switch, and the element (25) is designed as a permanently magnetic element.

6. Apparatus according to one of the preceding claims, characterized in that the sensor device (27) is arranged on a printed circuit board (26).

7. Apparatus according to Claim 6, characterized in that the printed circuit board (26) contains further electronic components of an electronic control device (22) for the drive apparatus and/or of an evaluation device for the signals from the sensor device (27).

8. Apparatus according to one of the preceding claims, characterized in that electronic means are provided for checking the production of the sensor signals.

9. Apparatus according to one of the preceding claims, characterized in that a position identification device has means for counting the sensor signals, with the count corresponding to an actual position value.

## Revendications

1. Dispositif pour détecter le mouvement du ruban d'entraînement d'un volet roulant par la rotation d'un élément de rotation dans un dispositif d'entraînement électrique du volet roulant à l'aide d'une installation de détection générant des signaux correspondants, le ruban d'entraînement passant d'un rouleau d'enroulement du dispositif d'entraînement sur un galet de renvoi vers le rouleau d'enroulement du volet roulant,
caractérisé en ce que
le galet de renvoi (17) en matière non ferromagnétique qui constitue l'élément de rotation est muni d'au moins un élément ferromagnétique (25) et/ou à aimantation permanente qui génère dans l'installation de détection (27) à chaque passage un signal par action du champ magnétique.

2. Dispositif selon la revendication 1,
caractérisé en ce qu'
au moins un élément (25) est de forme cylindrique logé dans au moins un perçage correspondant du galet de renvoi (17).

3. Dispositif selon la revendication 1 ou 2,
caractérisé par
au moins un élément (25) prévu dans la zone périphérique du galet de renvoi (17).

4. Dispositif selon l'une quelconque des revendications précédentes,
caractérisé en ce que
l'installation de détection est un élément à effet Hall ou une plaque de champ.

5. Dispositif selon l'une quelconque des revendications 1 à 3,
caractérisé en ce que
l'installation de détection (27) est un interrupteur à lamelle et l'élément (25) est un élément à aimantation permanente.

6. Dispositif selon l'une quelconque des revendications précédentes,
caractérisé en ce que
l'installation de détection (27) est prévue sur une plaque de circuit imprimé (26).

7. Dispositif selon la revendication 6,
caractérisé en ce que
la plaque de circuit imprimé (26) comporte plusieurs composants électroniques d'une installation de commande électronique (22) pour le dispositif d'entraînement et/ou une installation d'exploitation pour les signaux de l'installation de détection (27).

8. Dispositif selon l'une quelconque des revendications précédentes,
caractérisé
par des moyens électroniques pour contrôler l'émission des signaux de capteur.

9. Dispositif selon l'une quelconque des revendications précédentes,
caractérisé
par une installation de détection de position avec des moyens pour compter les signaux du capteur, l'état de comptage correspondant à une valeur réelle de position.
